# EUROPEAN PATENT APPLICATION

(11) **EP 4 552 785 A1**
(43) Date of publication of application: **14.05.2025**
(21) Application number: 23209018.3
(22) Date of filing: 10.11.2023
(51) Int. Cl.: B23K 20/12, B23K 20/227, B23K 20/233, B23K 37/06

(54) **METHOD AND APPARATUS FOR PERFORMING DOUBLE SIDED REFILL FRICTION STIR SPOT WELDING**

(71) Applicant: Helmholtz-Zentrum hereon GmbH, 21502 Geesthacht (DE)
(72) Inventor: Bernardi, Matteo, 21502 Geesthacht (DE); Suhuddin, Uceu Fuad Hasan, 21502 Geesthacht (DE); Klusemann, Benjamin, 21502 Geesthacht (DE)
(74) Representative: Bird & Bird LLP - Hamburg

(57) **Abstract**

The present invention relates to a method for performing simultaneous double refill friction stir spot welding, comprising: providing a first welding head (110) comprising a first probe member (102) and a first tubular shoulder (104); providing a second welding head (210) comprising a second probe member (202) and a second tubular shoulder (204); locating the first welding head (110) on a first surface of a weld object to be welded such that the first probe member (102) and the first tubular shoulder (104) are in contact with the first surface; locating the second welding head (210) on a second surface of the weld object (112), opposing the first surface; simultaneously rotating the first welding head and the second welding head so as to form a volume of materials of increased plasticity in the weld object proximate the first and second welding heads; simultaneously advancing one of the first probe member (102) and the first tubular shoulder (104), and one of the second probe member (202) and the second tubular shoulder (204), from an initial position and into the respective first and second surface of the weld object (112) along the respective first and second head axis (108, 208), while retracting the other of the first probe member (102) and the first tubular shoulder (104) and the second probe member (202) and the second tubular shoulder (204) from an initial position and along the respective first and second head axis (108, 208); returning each of the first and second probe member (102, 202) and first and second tubular shoulder (104, 204) towards the initial position; removing the first and second welding head (110, 210) from the respective first and second surface of the weld object (112).

## Description

The present invention relates to a method for performing refill friction stir spot welding.

The joining together of two components by welding is a widely known process. Typically, the method of welding involves securing two metals in contact and applying heat to a consumable material (e.g. in the form of a consumable electrode) so as to melt the consumable material as well as a portion of the materials to be welded, which then may be cooled to form a weld.

While this traditional welding technique is an effective way of creating a robust joint between two materials, it is not without drawbacks. For example, it requires the use of a consumable material which means that to continuously weld, an equally continuous supply of consumable material must be present. Further, the introduction of a second material into the weld process may provide the opportunity for impurities and weaknesses to be formed in a component at the weld, for example in the case where the consumable material has not been produced to a high enough quality.

A method for overcoming the need for a consumable material has been provided by the Welding Institute of the UK with the invention of friction stir welding. Friction stir welding is a solid state joining process that uses frictional heat generated by a rotating tool to join materials, and does not require the use of a consumable material.

Friction stir spot welding (FSSW) is a solid-state joining technique derived from friction stir welding (FSW). Unlike FSW, FSSW does not involve linear tool motion, leading to a specific "spot" weld. Although this technology has attracted interest in a number of industries, its industrial adoption has been limited, mainly because of the exit-hole generated.

In response to these concerns, a further approach known as refill friction stir spot welding (Refill FSSW) had been developed. This innovative technique, outlined in WO 01/36144 A1, utilizes a redesigned tool to achieve spot welding without exit-hole by advancing a probe into the object to be welded while simultaneously retracting a tubular shoulder surrounding the probe, with both the probe and the shoulder being rotated. During this movement, material plasticised by friction between the probe and the object to be welded and pushed out by the advancing probe is received in the space between the probe and the tubular shoulder. When the probe was advanced into the object up to a certain depth, the combined movement is reversed so that the probe is retracted while the shoulder is advanced towards the object with the displaced material pushed back into the recess created by the probe.

Although this conventional method of refill FSSW avoids using consumable material and exit holes, it still has certain limitations. For instance, the welding depth is constrained by the refill FSSW machine's plunge depth. This restriction results in an inability to weld thicker joints or increase the welding time and degrade the previous weld when performing welds one after another.

Furthermore, the challenge of welding multi-stack joints, such as Al-Ti-Al or Al-St-Al, arises due to the higher melting temperature of the intermediate material. This elevated melting point renders fusion welding or traditional refill FSSW impractical for such applications.

It is an object of the present invention to overcome the aforementioned drawbacks while providing further advantages, as will be described herein.

An aspect of the invention relates to a method for performing a refill friction stir spot weld. The method comprises providing a first welding head comprising a first probe member and a first tubular shoulder, the first probe member being located inside and axially aligned with the first tubular shoulder along a first head axis, and providing a second welding head comprising a second probe member and a second tubular shoulder, the second probe member being located inside and axially aligned with the second tubular shoulder along a second head axis. The method comprises locating the first welding head on a first surface of a weld object to be welded such that the first probe member and the first tubular shoulder are in contact with the first surface, and locating the second welding head on a second surface of the weld object, opposing the first surface, such that the second probe member and the second tubular shoulder are in contact with the second surface and the first head axis is aligned with the second head axis. The method comprises simultaneously rotating the first welding head and the second welding head so as to form a volume of increased plasticity in the weld object proximate (and in contact with) the first and second welding heads, and simultaneously advancing one of the first probe member and the first tubular shoulder, and one of the second probe member and the second tubular shoulder, from an initial position and into the respective first and second surface of the weld object along the respective first and second head axis, while retracting the other of the first probe member and the first tubular shoulder and the second probe member and the second tubular shoulder (e.g. in the opposite direction) from an initial position and along the respective first and second head axis. The method comprises returning each of the first and second probe member and first and second tubular shoulder towards the initial position, and removing the first and second welding head from the respective first and second surface of the weld object.

In use, the method may be used to provide a weld in a weld object by locating the first welding head on a first surface of the weld object and locating the second welding head on a second surface of the weld object, and simultaneously advancing both the first and second welding heads into the weld object so as to plasticise a volume of the weld object, thus creating a weld volume of the weld object that extends from both a first and a second surface of the weld object. In performing the described method on both the first and second surfaces of a weld object, heat losses that may normally occur via the rear surface (e.g. the second surface) of the weld object may be avoided, and in fact the heat penetrating through the weld object, e.g. from the first surface to the second surface, may increase the efficiency of providing a weld on the second surface, and vice versa. Further, the increased heat provided may permit materials requiring more energy to be plasticised and deeper welds to be achieved. Thus, a synergy is achieved compared to providing a weld on a single surface. Further, the weld volume may be of a greater volume, and may even extend through the entire thickness of the weld object, thereby increasing the strength of the weld as compared to providing a weld on just one surface of the weld object at a given time. In particular, by simultaneously welding from both sides, it becomes feasible to weld joints in a single step that are twice as thick as those achievable with the conventional refill FSSW process.

The method may comprise simultaneously advancing the first tubular shoulder and the second tubular shoulder from the initial position and into the respective first and second surface of the weld object along the respective first and second head axis, while retracting the first and second probe members from the initial position the along the respective first and second head axis. The initial position may correspond to the position of the first and second probe members and tubular shoulders in contact with the weld object prior to rotation of the first and second probe members and the first and second tubular shoulders. The method may therefore comprise locating the first and second probe members and first and second tubular shoulders in contact with the respective first and second surfaces of the weld object, with the first and second probe members and the first and second tubular shoulders being rotationally stationary (e.g. not rotating relative to one another or the weld object).

The weld object may comprise a first and a second component located between the first and second welding heads with the first component comprising the first surface and the second component comprising the second surface, and the method comprises advancing the first tubular shoulder into the weld object a distance equal or less than the thickness of the first component, and advancing the second tubular shoulder into the weld object a distance equal or less than the thickness of the second component. The first and second component may be in the form of a sheet of material to be welded, such as a sheet of aluminium. The weld object may be in the form of a weld stack, in which case the resulting weld may be in the form of a multistack joint. In particular, the method of the present invention is suitable for spot welding of aluminum and aluminum alloys, magnesium and magnesium alloys as well as copper and copper alloys and combinations thereof. In addition, in thermoplastic polymers and polymer matrix composites and combinations with the afore-mentioned materials spot welds may also be created by the method of the present invention. Further, whilst components of titanium and titanium alloys as well as of steel may also form part of weld object subjected to the method of the present invention, it is to be noted though that in case of these materials it is preferred that the probe members and/or the tubular shoulders do not penetrate the components of these materials. Finally, the present invention is not restricted to the afore-mentioned examples of materials.

The method may comprise simultaneously advancing the first tubular shoulder and the second probe member from the initial position and into the respective first and second surface of the weld object along the respective first and second head axis, while retracting the first probe member and the second tubular shoulder from the initial position along the respective first and second head axis. By advancing a probe member of one welding head and a tubular shoulder of the other welding head, the user may be able to provide a preferable shape and/or structure of weld.

The weld object may comprise a first and a second component located between the first and second welding heads, with the first component comprising the first surface and the second component comprising the second surface, and the method may comprise advancing first tubular shoulder into the weld object a distance of more than the thickness of the first component, and advancing the second probe member into the weld object a distance of more than the thickness of the second component. By advancing the first tubular shoulder into the weld object more than the thickness of the first component, a weld may be created in which the mechanical mixing of the first and second component is particularly high, which may improve the integration of the weld volume into the welded first and second component.

It is further preferred that the distance up to which the first shoulder is advanced into the weld object may only by slightly larger that the thickness of the first component so that essentially only the surface region of the second component is affected which is adjacent the first component, i.e., the first shoulder merely "scrubs" on the second component. Similarly, in this further preferred embodiment the distance up to which the second probe member is advanced into the weld object may only by slightly larger than the thickness of the second component, so that essentially only the surface region of the first component is affected by the second probe member, i.e., the second probe member merely scrubs on the first component. This embodiment has proven to result in a particularly stable joint.

The method may comprise advancing the first tubular shoulder and the second probe member into the weld object so as to partially locate the second probe member in the first tubular shoulder. Thereby, when the probe member and tubular shoulder are returned to their original position, mixing of the first and second component may be assisted.

The weld object may comprise a third component located between first and second components and the method comprises advancing one of the first probe member and the first tubular shoulder into the weld object along the first head axis a distance larger, equal or less than the thickness of the first component, and advancing one of the second probe member and the second tubular shoulder into the weld object along the second head axis (208) a distance larger, equal or less than the thickness of the second component, while retracting the other of the first probe member and the first shoulder and the other of the second probe member and the second shoulder from the initial position along the respective first and second axes. The third component may have a lower plasticity at a given temperature than the first and second components. The third component may have a higher melting point than the first and second components. The first and second components may be made from the same first material, whereas the third component may be made from a second material. For example, the first and second components may be made from aluminium, whereas the third component may be made from titanium. The third component may therefore be welded to the first and second elements, which may provide a high-strength multistack joint. It is further preferred that the distance up to which the first probe member or the first shoulder is advanced into the weld object may only by slightly larger than the thickness of the first component so that essentially only the surface region of the third component is affected which is adjacent the first component, i.e., the first probe member or the shoulder merely "scrub" on the third component. Similarly, in this further preferred embodiment the distance up to which the second probe member or the second shoulder is advanced into the weld object may only by slightly larger that the thickness of the second component, so that essentially only the surface region of the third component is affected by the second probe member or the second shoulder, i.e., the second probe member or the second shoulder merely scrub on the third component.

The method may also comprise advancing the first probe member and the second probe member from the initial position and into the respective first and second surface of the weld object along the respective first and second head axis, while retracting the first tubular shoulder and the second tubular shoulder from the initial position along the respective first and second head axis. By advancing the probe member of the welding heads in parallel, the user may be able to provide a specific shape and/or structure of weld. In particular, the intermixing of the material of the weld object may be improved.

The volume of increased plasticity extends through the entire width of the weld object, e.g. may extend through both the first and second components.

The first welding head and the second welding head may be structurally identical, which may facilitate providing a weld that is of consistent quality and strength throughout the width of the weld object.

The first welding head and the second welding head may be structurally different. For example, the diameter of the first probe member may be greater or lesser than the diameter of the second probe member. The inner diameter of the first tubular shoulder may be greater or lesser than the inner diameter of the second tubular shoulder. The outer diameter of the first tubular shoulder may be greater or lesser than the outer diameter of the second tubular shoulder. As such, an asymmetrical weld may be created in the weld object.

The first welding head may comprise a first clamp and the second welding head may comprise a second clamp. The method may comprise clamping the weld object between the first clamp and the second clamp prior to rotating the first and second welding heads. Thus, the weld object may be secured prior to welding, ensuring accuracy of the weld, and alignment on both sides of the weld object. Moreover, the clamps surrounding the tubular shoulders prevent plasticised material from being squeezed laterally outwardly so that it ensured that the entire material be pushed of the weld object when the probes and/or the shoulder are advanced into the object may be pushed into the recess created by the advancing movement.

The method may comprise simultaneously rotating the first shoulder and the first probe member in the same direction and simultaneously rotating the second shoulder and the second probe member in the same direction. Alternatively, it is also conceivable that the method comprises simultaneously rotating the first shoulder and the first probe member in opposite directions and simultaneously rotating the second shoulder and the second probe member in opposite directions. In this way the introduction of heat and the mixing in the region affected by the welding heads may further be adjusted to the specific requirements of the components involved. In addition to choose the rotational direction in which the probe members and the tubular shoulder rotate, also the respective rotational speeds may be adjusted according to the needs of the materials and dimensions of the weld object.

Furthermore, the method may comprise rotating the first probe member and the second probe member in the same direction. Alternatively, the method may comprise rotating the first probe and the second probe in opposite directions. This provides for further options to optimize mixing and heat introduction in the weld region.

A second aspect relates to an apparatus for providing a refill friction stir spot weld. The apparatus comprises a first welding head comprising a first probe member and a first tubular shoulder, the first probe member being located inside and axially aligned with the first tubular shoulder along a first head axis, and the first probe member being rotatable relative to the first tubular shoulder, and a second welding head comprising a second probe member and a second tubular member, the second probe member being located inside and axially aligned with the second tubular shoulder along a second head axis, and the second probe member being rotatable relative to the second tubular shoulder. The apparatus further comprises a recess for positioning a weld object therein, the recess located between the first welding head and the second welding head, wherein the first welding head is oppositely disposed relative to the second welding head, and the first welding head and the second welding head are axially movable along the respective first and second head axes, so as to selectably engage a weld object positioned in the recess.

The apparatus may be configured such that the first welding head comprises a first clamp and the second welding head comprises a second clamp for clamping the weld object between the first clamp and the second clamp, which allows to fix the weld object relative to the welding heads in a well-defined position.

### BRIEF DESCRIPTION

Figure 1 illustrates an example of a refill friction stir spot welding according to a known method.
Figure 2 illustrates an example of refill friction stir spot welding according to the present disclosure.
Figure 3 is a further example of refill friction stir spot welding showing an alternative advancement and retraction of the probe members and tubular shoulders relative to the weld object.
Figure 4 is a further example of refill friction stir spot welding showing an alternative advancement and retraction of the probe members and tubular shoulders relative to the weld object.
Figure 5 is an illustration of the described method comprising an alternative weld object.
Figure 6 is an illustration of the described method comprising a further alternative weld object.

### DETAILED DESCRIPTION

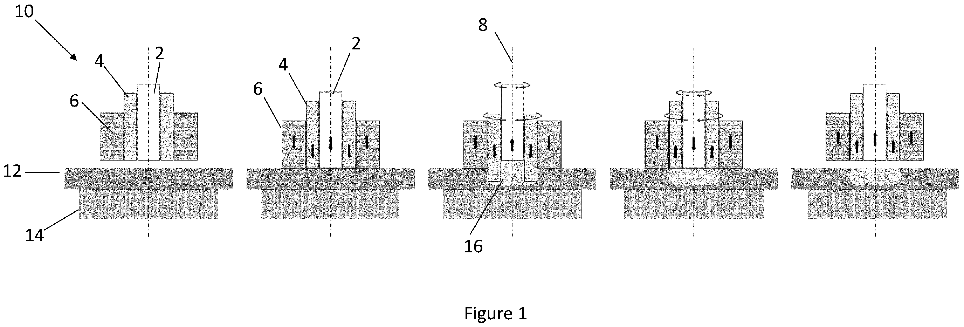

Figure 1 provides an example of a refill friction stir spot welding process according to a known method. Here, a welding head 10 comprises a probe member 2 and a tubular shoulder 4. A clamp 6 may optionally also be considered to be part of the welding head 10. The probe member 2 is cylindrical in shape, while the tubular shoulder 4 is in the form of a cylindrical sleeve, comprising a central recess. As is illustrated in Figure 1, the probe member 2 is located in the central recess of the tubular shoulder 4, and both the probe member 2 and the cylindrical shoulder are positioned around a central axis 8 of the welding head 10. Although not illustrated, both the probe member 2 and the tubular shoulder 4 are connected to a drive member that is configured to rotate both the probe member 2 and the tubular shoulder 4 about the central axis 8, as well as move both in a translational direction along the central axis.

In operation, the welding head 10 may be positioned near a weld object 12, as is shown in the leftmost image of Figure 1. The weld object 12 may be provided on a support 14, as is illustrated in Figure 1. The welding head 10 may then be moved axially into contact with the weld object 12, so as to be in contact therewith, and may be pushed against the weld object 12 with a predetermined force so as to apply a pressure from the welding head 10 onto the weld object 12, as is illustrated on the second leftmost image of Figure 1.

Maintaining the pressure on the weld object 12, both the probe member 2 and the tubular shoulder 4 may be rotated, thereby creating friction between the welding head 10, i.e. the probe member 2 and/or the shoulder 4, and the weld object 12, resulting in the generation of heat therebetween. The generated heat penetrates the material at the same time as the tubular shoulder 4 is advanced into the weld object 12 from its initial position in contact with the weld object 12, and the probe member 2 is withdrawn from its initial position in contact with the weld object 12. The generated heat from the rotation of the probe member 2 and the tubular shoulder 4 in contact with the weld object 12 causes the temperature of the weld object 12 in the vicinity of the welding head 10 to rise and creates a plasticised volume 16 of the weld object, the plasticised volume being more malleable than the surrounding weld object.

As the tubular shoulder 4 is driven into plasticised volume 16 of the weld object 12, and the probe member 2 is withdrawn from its initial position, the plasticised volume 16 moves in an upwards direction towards the probe member 2 as it is displaced by the tubular shoulder 4 being driven into the weld object 12.

After a predetermined length of time and displacement of the probe member 2 and the tubular shoulder 4, both the probe member 2 and the tubular shoulder 4 are moved back towards their initial position, forcing the displaced plasticised material of the plasticised volume 16 back towards the weld object 12, as is illustrated in the second rightmost image of Figure 1. Finally, rotation of the probe member 2 and the tubular shoulder 4 may be stopped and the welding head 10 removed from the surface of the weld object 12 to allow the plasticised volume to cool and the weld to set.

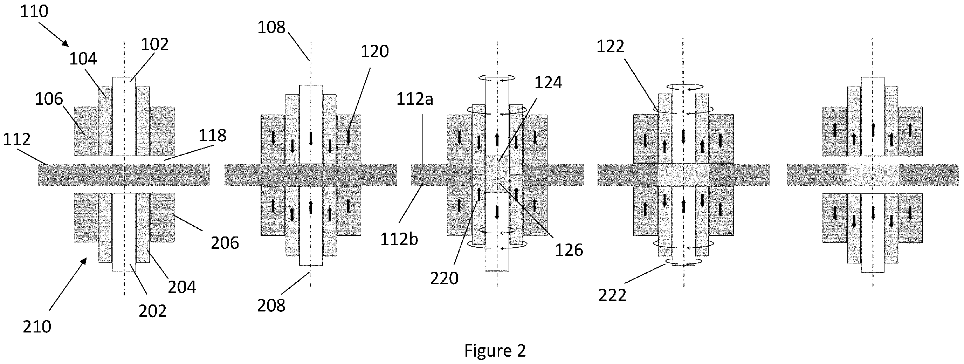

Figure 2 illustrates steps in a method for providing a refill friction stir spot weld and an apparatus according to the present invention. Here, a first welding head 110 and a second welding head 210 are illustrated. Each of the first and second welding head 110, 210 comprise a first probe member 102 and a second probe member 202 and a first and a second tubular shoulder 104, 204. In this example, each of the first and second probe members 102, 202 are cylindrical in shape and are positioned inside a recess formed in the respective first and second tubular shoulders 104, 204. The tubular shoulders 104, 204 have the shape of a cylindrical sleeve, although it should be noted that the central recess of the tubular shoulder need to extend the entire length thereof. The first probe member 102 and the first tubular shoulder 104 are positioned such that the longitudinal axes thereof are aligned with a first head axis 108 of the first welding head 110. The second probe member 202 and the second tubular shoulder 204 are positioned such that the longitudinal axes thereof are aligned with a second head axis 208 of the second welding head 210. The first welding head 110 comprises a first clamp 106, while the second welding head 210 comprises a second clamp 206. In this example, the first and second clamp 106, 206 form part of the respective welding head 110, 210, and are located radially outwardly of the respective first and second tubular shoulders 104, 204. The first and second clamps 106, 206 may be in the form of a cylindrical clamp member, comprising a recess into which the respective first and second probe members 102, 202 and tubular shoulders 104, 204 are positioned.

The clamps 106, 206 function to hold the respective probe members 102, 202 and tubular shoulders 104, 204 in place during the formation of a weld in a weld object 112. Further, the clamps 106, 206 prevent plasticised material from escaping from the region below the shoulder 104, 204.

Although not illustrated, the first probe member 102 and the first tubular shoulder 104 may be coupled to a rotation device to enable rotation thereof. The first probe member 102 and the first tubular shoulder 104 may be rotatable relative to one another, and as such may be coupled to a rotation device that allows independent rotation of each, or each may be coupled to a separate rotation device. Similarly, the second probe member 202 and the second tubular shoulder 204 may be coupled to a rotation device to enable rotation thereof, may be rotatable relative to one another, and may be coupled to separate rotation devices to enable independent rotation thereof, or to a single rotation device that enables such independent rotation.

As illustrated, in the example of Figure 2, the first welding head 110 and the second welding head 210 are located on either side of the weld object 112 such that the first head axis 108 of the first welding head 110 is aligned with the second head axis 208 of the second welding head 210. Since the first welding head 110 and the second welding head 210 are geometrically identical in this example, aligning the first welding head 110 with the second 210 may ensure a balanced application of force on either side of the weld object 112 and therefore a balanced weld.

The first welding head and the second welding head are also translationally movable e.g., in the direction towards or away from each other, which in this case is in the direction of respective the head axes 108, 208, or parallel to the head axes 108, 208.

Here, the weld object 112 is composed of a first component 112a and a second component 112b. In this example, both the first and second component 112a, 112b are made from the same material, although it should be noted that this need not necessarily be the case and the first and second components 112a, 112b may be made from different materials. The weld object 112 may have a total thickness of 6-8mm, meaning that each component 112a, 112b may have a thickness of 3-4mm. The weld object 112 is positioned in a recess 118 between the first welding head 110 and the second welding head 210. The weld object 112 may be held in place by any appropriate means, for example by an external arm, clamp, or the like, that is not illustrated in Figure 2 for clarity.

Once the weld object 112 has been placed in the recess 118 between the first welding head 110 and the second welding head 210, as is illustrated in the leftmost image of Figure 2, the first and second welding heads are advanced towards each other in a direction aligned with the respective head axes 108, 208 until both the first and second welding heads 110, 210 are in contact with the weld object 112. In particular, a leading surface of the probe member 102, 202, the tubular shoulder 104, 204 and in this example also the clamp 106, 206 are aligned on the surface of the weld object 112, so as to take an "initial position" in contact with the weld object 112. Pressure is then applied to the weld object 112 via the first and second welding heads 110, 210, and as is illustrated by the arrows 120, 220 on the second leftmost image of Figure 2.

Moving now to the central image of Figure 2, the probe members 102, 202 and the tubular shoulders 104, 204 are rotated about the respective head axes 108, 208 simultaneously, as illustrated by the arrows 122, 222.

It is possible that the first shoulder 104 and the first probe member 102 rotate in the same direction and similarly the second shoulder 204 and the second probe member 202 may also rotate in the same direction. Alternatively, it is also possible that the first shoulder 104 and the first probe member 102 rotate in opposite directions and that the second shoulder 204 and the second probe member 202 rotate in opposite directions. In this way the introduction of heat and the mixing in the region affected by the welding heads 110, 210 may further be adjusted to the specific requirements of the weld object 112. In addition, in either of the afore-mentioned options the first probe member 102 and the second probe member 202 may rotate in the same direction or in opposite directions. In addition to choose the rotational direction in which the probe members 102, 202 and the tubular shoulder 104, 204 rotate also the respective rotational speeds may be adjusted according to the needs of the materials and dimensions of the weld object 112.

In rotating both the probe members 102, 202 and the tubular shoulders 104, 204 in contact with the weld object 112, friction is caused between the leading surface of the rotating probe members 102, 202 and tubular shoulders 104, 204, so as to generate heat therebetween. The heat propagates through the weld object so as to heat the weld object and produce a volume of increased plasticity 124 within the weld object. The volume of increased plasticity may be more malleable than the surrounding weld object. Both the rotational speed, the rotational direction and the force with which the welding head 110, 210 (in this case the tubular shoulder 104, 204) is pressed into the weld object 112 may be varied to vary the amount of heat generated. This may vary depending, for example, on the energy input required for the specific material of the weld object 112 to be plasticised, and/or the melting point of the material of the weld object 112.

At the same time as the first and second probe members 102, 202 and the first and second tubular shoulders 104, 204 are rotated, the tubular shoulders 104, 204 are advanced (e.g. driven) into the weld object 112, as is illustrated in the central image of Figure 2, and into the volume of increased plasticity 124, while the probe members 102, 202 are withdrawn from their initial position in a direction away from the weld object 112. As shown in the central image of Figure 2, this has the effect of forming a recess 126 (in this case, a cylindrical recess) that is aligned with the head axes 108, 208 and partially defined by the central recess of each of the tubular shoulders 104, 204. So as to avoid damage to either of the tubular members 104, 204, contact between the tubular members 104, 204 during operation may be avoided.

Although the probe members 102, 202 and the tubular shoulders 104, 204 are illustrated as being rotated in the same direction, it should be noted that they may be rotated in different directions as already mentioned above, which may provide a variation in the generation of heat and therefore may provide the user with another variable through which to control the welding method.

As is also illustrated, the volume of increased plasticity 124 extends through the entire thickness of the weld object 112. This is thanks to the heat being generated on both sides of the weld object 112, and also due to each welding head 110, 210 benefitting from the heat being generated from the other welding head 210, 110, thus creating a synergy between the welding heads 110, 210. This means, in addition, that it may not be necessary to provide the same level of pressure and/or the same degree of rotation, meaning that the lifespan of the welding head is increased.

Once the tubular shoulders 104, 204 have been advanced into the weld object by a predetermined distance (and once the probe members 102, 202 have been withdrawn a predetermined distance) the probe members 102, 202 and the tubular shoulders 104, 204 may be returned to their original position (e.g. the initial position) after a predetermined length of time. The length of time may be varied depending, for example, the stiffness of the material of the weld object 112 and the melting point of said material. The predetermined distance may be equal between the tubular shoulders 104, 204 and probe members 102, 202, or may be based on the thickness of the first and second components 112a, 112b, which may or may not be equal. For example the predetermined distance for each of the tubular shoulders 104, 204 may be 50%, 45%, 40% or the like of the thickness of the weld object 112, or may be the entire thickness of the respective first or second component 112a, 112b, or 95% of the thickness, 90% of the thickness, or the like, of the respective component 112a, 112b.

With the probe members 102, 202 and the tubular shoulders 104, 204 returned to the original position, the volume of material of increased plasticity 124 is forced back into the original volume of the weld object 112. Rotation of the probe members 112 continues during return of the probe members 102, 202 and the tubular shoulders 104, 204 is maintained until the probe members 102, 202 and the tubular shoulders 202, 204 are back in their initial positions. The described movement of the probe members 102, 202 and the tubular shoulders 202, 204 may have the effect of mixing the plasticised volume, spanning over both components 112a, 112b of the weld object, together.

The welding heads 110, 210 may then be withdrawn from the weld object 112 and the plasticised volume allowed to cool, thus solidifying the plasticised volume together to form a weld volume.

Although the first and second probe members 102, 202 and the first and second tubular shoulders 104, 204 are illustrated as having the same dimensions, this may not necessarily be the case. For example, one of the first and second probe members 102, 202 may have a larger or smaller diameter than the other, and as such the corresponding inner diameter of the tubular shoulder 104, 204 may also differ. Further, the outer diameter of one tubular shoulder 104, 204 may be larger or smaller than the other. As such, the shape and strength of the plasticised volume may be varied on this basis.

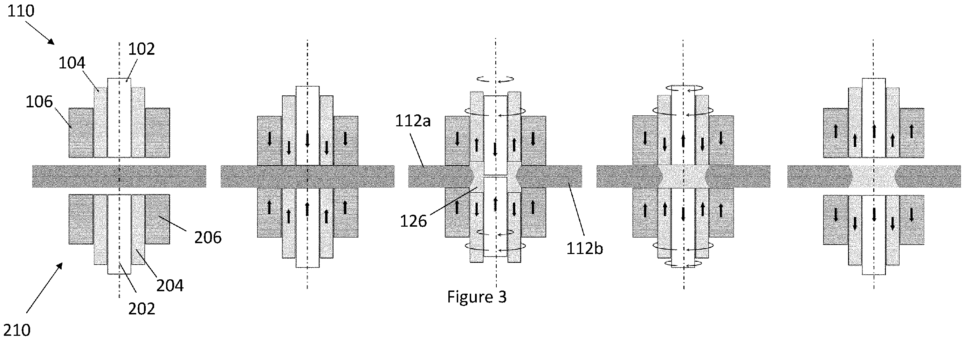

Figure 3 illustrates another example of a method of providing a refill friction stir spot weld. Many of the features of Figure 3 are common to those described in Figure 2 and therefore will not be repeated.

As before, a first and a second welding head 110, 210 comprising a respective first and second probe member 102, 202, first and second tubular shoulder 104, 204 and first and second clamp 106, 206 are illustrated. As is evident from Figure 3, only the central image is different from that of Figure 2.

According to the method illustrated in Figure 3, the first probe member 102 is rotated and advanced into the weld object 112, while the second probe member 202 is also advanced into the weld object 112 from its initial position. In parallel, the first and second tubular shoulders 104, 204 are withdrawn from the weld object 112, which is in contrast to the illustration of Figure 2. In this example the first and second probe members 102, 202 are advanced into the weld material.

As is illustrated, one recess, which is defined by the probe members 102, 202, is formed containing the volume of plasticised material. This volume 126 is defined by the first and second probe members 102, 202. To form this volume, the first tubular shoulder 102 and the second probe member 202 may be advanced into the weld object 112 by less than 50% of the width or thickness of the weld object. Here a sole volume may improve the mixing of the material of the plasticised volume, and may provide a preferable weld strength for some applications, compared to the illustration of Figure 2.

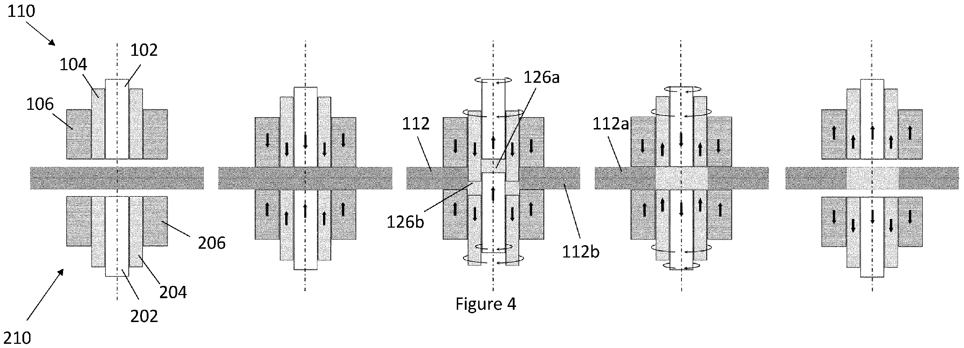

Figure 4 illustrates a further example of a method of providing a refill friction stir spot weld. Many of the features of Figure 4 are common to those described in Figures 2 and 3 therefore will not be repeated.

As before, a first and a second welding head 110, 210 comprising a respective first and second probe member 102, 202, first and second tubular shoulder 104, 204 and first and second clamp 106, 206 are illustrated. As is evident from Figure 4, only the central image is different from that of Figures 2 and 3.

According to the method illustrated in Figure 4, the first shoulder member 104 is rotated and advanced into the weld object 112 as in Figure 2, while the second probe member 202 is advanced into the weld object 112 from its initial position, while the second tubular shoulder 204 is withdrawn from the weld object 112, which is in contrast to the illustration of Figure 2. In this example the second probe member 202 is advanced into the weld material such that the second probe member 202 is partially located in the recess of the first tubular member 104, although it should be noted that in some other examples, the second probe member 202 and the first tubular shoulder 104 may be advanced into the weld object 112 to a lesser extent, such that the second probe member 202 is not located within the first tubular shoulder 104.

As is illustrated, rather than forming one recess that is defined by the tubular shoulders 104, 204 (e.g. an inner surface of the tubular shoulders) and the probe members 102, 202, (e.g. the lead surface of the probe members 102, 202, here two recesses are formed containing the volume of plasticised material. A first of these volumes 126a is defined by the inner surface of the first tubular shoulder 104 and the lead surfaces of the first and second probe members 102, 202, while a second volume 126b is defined by the outer surface of the second probe member 202, the lead surfaces of the tubular shoulders 104, 204 and the second clamp 206. To form these volumes, the first tubular shoulder 104 and the second probe member 202 may be advanced into the weld object 112 more than 50% of the width of the weld object. Having two separate volumes may improve the mixing of the material of the plasticised volume, and may provide a preferable weld strength for some applications, compared to the illustration of Figure 2.

In this example the distance up to which the first shoulder 104 is advanced into the weld object 112 may only by slightly larger than the thickness of the first component 112a so that essentially only the surface region of the second component 112b adjacent the first component 112a is affected, i.e., the first shoulder 104 merely "scrubs" on the second component 112b. Similarly, the distance up to which the second probe member 202 is advanced into the weld object 112 may only by slightly larger that the thickness of the second component 112b, so that essentially only the surface region of the first component 112a is affected by the second probe member 202, i.e., the second probe 202 merely scrubs on the first component 112a.

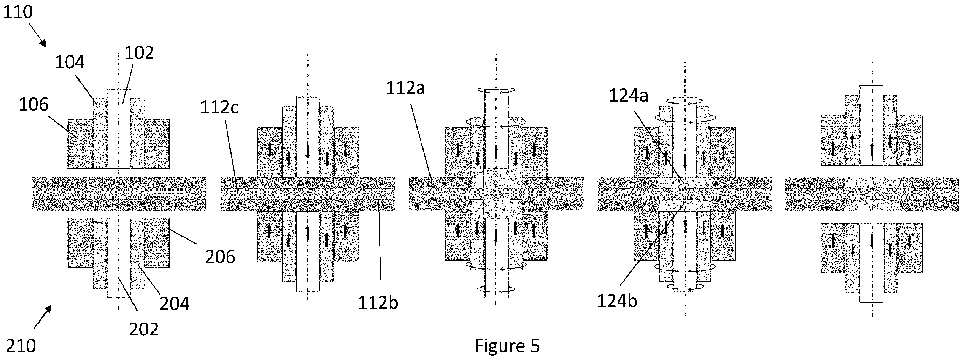

Furthermore, Figure 5 illustrates a fourth example of a method for providing a refill friction stir spot weld. In this example, the same movement of the welding heads 110, 210 is performed as in Figure 2, but the weld object is constructed of a first, second and third component 112a, 112b, 112c, with the third component 112c being positioned between the first and second components 112a, 112b. Here, the first and second components 112a, 112b are of the same material, for example aluminium, whereas the third component 112c is of a different material, for example titanium. In this example, two plasticised volumes 124a, 124b are present in the first and second components 112a, 112b of the weld object 112. The melting point of the third component 112c may be higher than that of the first and second components 112a, 112b, and therefore no plasticised volume may form in the third component 112c, or a plasticised volume of reduced plasticity compared to that in the first and second components 112a, 112b may form. Here, it is to be noted that the first and second components 112a, 112b may also be of different materials such as magnesium and copper.

According to this method, the tubular shoulders 104, 204 may be advanced into the weld object 112 only a distance up to or equal to the thickness of the respective first component 112a or second component 112b, and the plasticised volumes 124a, 124b may form two welds with the surface of the third component 112c. However, it is also conceivable that the distance up to which the first and second shoulders 104, 204 are advanced into the first and second components 112a, 112b are slightly larger than the respective thicknesses of the components so that the surface regions of the third component 112c are also affected by the first and second shoulders 104, 204.

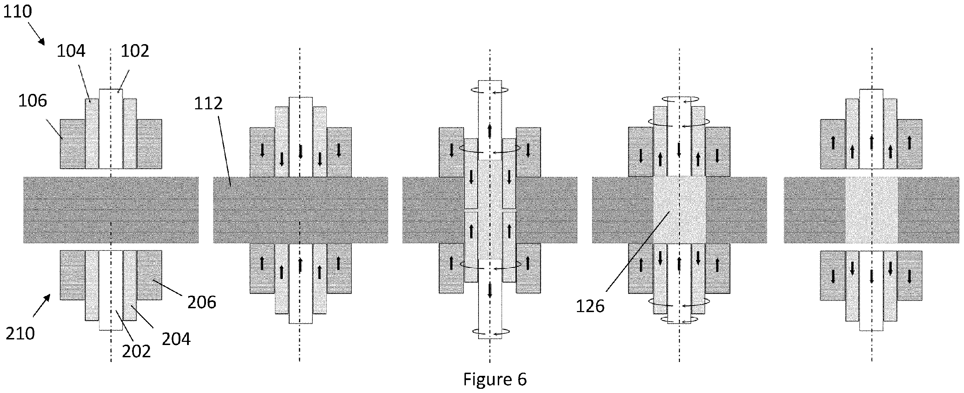

Furthermore, Figure 6 illustrates a fifth example of a method for providing a refill friction stir spot weld. In this example, the same movement of the welding heads 110, 210 is performed as in Figure 2. However, the weld object 112 is constructed of a plurality of components forming as multilayer arrangement. Here, the components may be of the same material or of alternating material, for example aluminium and copper as it is used in battery technology. In this example, a sole contiguous plasticised volume 126 is present in the plurality of components and it can be seen that a stir spot weld may be formed in a multilayer structure with the method of the present invention.

While the above have been described separately, it should be noted that these are simply illustrative examples of possible method and the steps described in relation to one method may be applicable to another. For example, the movement of the probe members 102, 202 and tubular shoulders 104, 204 described in Figure 3 and 4 may be applicable to the method having a three- or more component weld object 112 of Figures 5 and 6.

## Claims

1. A method for performing refill friction stir spot welding, comprising:
providing a first welding head (110) comprising a first probe member (102) and a first tubular shoulder (104), the first probe member (102) being located inside and axially aligned with the first tubular shoulder (104) along a first head axis (108);
providing a second welding head (210) comprising a second probe member (202) and a second tubular shoulder (204), the second probe member (202) being located inside and axially aligned with the second tubular shoulder (204) along a second head axis (208);
locating the first welding head (110) on a first surface of a weld object to be welded such that the first probe member (102) and the first tubular shoulder (104) are in contact with the first surface;
locating the second welding head (210) on a second surface of the weld object (112), opposing the first surface, such that the second probe member (202) and the second tubular shoulder (204) are in contact with the second surface and the first head axis (108) is aligned with the second head axis (208);
simultaneously rotating the first welding head and the second welding head so as to form a volume of increased plasticity in the weld object proximate the first and second welding heads;
simultaneously advancing one of the first probe member (102) and the first tubular shoulder (104), and one of the second probe member (202) and the second tubular shoulder (204), from an initial position and into the respective first and second surface of the weld object (112) along the respective first and second head axis (108, 208), while retracting the other of the first probe member (102) and the first tubular shoulder (104) and the second probe member (202) and the second tubular shoulder (204) from an initial position and along the respective first and second head axis (108, 208);
returning each of the first and second probe member (102, 202) and first and second tubular shoulder (104, 204) towards the initial position; and
removing the first and second welding head (110, 210) from the respective first and second surface of the weld object (112).

2. The method for performing refill friction stir spot welding according to claim 1, comprising simultaneously advancing the first tubular shoulder (104) and the second tubular shoulder (204) from the initial position and into the respective first and second surface of the weld object (112) along the respective first and second head axis (108, 208), while retracting the first and second probe members (102, 202) from the initial position the along the respective first and second head axis (108, 208).

3. The method for performing refill friction stir spot welding according to claim 2, wherein the weld object (112) comprises a first and a second component (112a, 112b) located between the first and second welding heads (110, 210), the first component (112a) comprising the first surface and the second component (112b) comprising the second surface, and
the method comprises advancing the first tubular shoulder (104) into the weld object (112) a distance equal or less than the thickness of the first component (112a), and advancing the second tubular shoulder (204) into the weld object (112) a distance equal or less than the thickness of the second component (112b).

4. The method for performing refill friction stir spot weld according to claim 1, comprising simultaneously advancing the first tubular shoulder (104) and the second probe member (202) from the initial position and into the respective first and second surface of the weld object (112) along the respective first and second head axis (108, 208), while retracting the first probe member (102) and the second tubular shoulder (204) from the initial position along the respective first and second head axis (108, 208).

5. The method for performing refill friction stir spot welding according to claim 4, wherein the weld object (112) comprises a first and a second component (112a, 112b) located between the first and second welding heads (110, 210), the first component (112a) comprising the first surface and the second component comprising the second surface, and
the method comprises advancing the first tubular shoulder (104) into the weld object a distance of more than the thickness of the first component (112a), and advancing the second probe member (202) into the weld object (112) a distance of more than the thickness of the second component (112b).

6. The method for performing refill friction stir spot welding according to claim 4 or 5, comprising advancing the first tubular shoulder (104) and the second probe member (202) into the weld object (112) so as to partially locate the second probe member (202) in the first tubular shoulder (104).

7. The method for performing refill friction stir spot welding according to claim 1, wherein the weld object (112) comprises a first and a second component (112a, 112b) located between the first and second welding heads (110, 210), the first component (112a) comprising the first surface and the second component (112b) comprising the second surface, and a third component (112c) located between the first and second components (112a, 112b) and
the method comprises advancing one of the first probe member (102) and the first tubular shoulder (104) into the weld object (112) along the first head axis (108) a distance larger, equal or less than the thickness of the first component (112a), and advancing one of the second probe member (202) and the second tubular shoulder (204) into the weld object (112) along the second head axis (208) a distance larger, equal or less than the thickness of the second component (112b) while retracting the other of the first probe member (102) and the first shoulder (104) and the other of the second probe member (202) and the second shoulder (204) from the initial position along the respective first and second axes (108, 208).

8. The method for performing refill friction stir spot welding according to claim 1, advancing the first probe member (102) and the second probe member (202) from the initial position and into the respective first and second surface of the weld object (112) along the respective first and second head axis (108, 208), while retracting the first tubular shoulder (104) and the second tubular shoulder (204) from the initial position along the respective first and second head axis (108, 208).

9. The method for performing refill friction stir spot welding according to any preceding claim, wherein the first welding head (110) comprises a first clamp (106) and the second welding head (210) comprises a second clamp (206) and the method comprises clamping the weld object (112) between the first clamp (106) and the second clamp (206) prior to rotating the first and second welding heads (110, 210).

10. The method for performing refill friction stir spot welding according to any preceding claim, comprising simultaneously rotating the first tubular shoulder (104) and the first probe member (102) in the same direction and
comprising simultaneously rotating the second tubular shoulder (204) and the second probe member (202) in the same direction.

11. The method for performing refill friction stir spot welding according to any of claims 1 to 9 comprising simultaneously rotating the first tubular shoulder (104) and the first probe member (102) in opposite directions and
comprising simultaneously rotating the second tubular shoulder (204) and the second probe member (202) in opposite directions.

12. The method for performing refill friction stir spot welding according claim 10 or 11, comprising rotating the first probe member (102) and the second probe member (202) in the same direction.

13. The method for performing refill friction stir spot welding according claim 10 or 11, comprising rotating the first probe member (102) and the second probe member (202) in opposite directions.

14. An apparatus for providing refill friction stir spot welding, comprising:
a first welding head (110) comprising a first probe member (102) and a first tubular shoulder (104), the first probe member (102) being located inside and axially aligned with the first tubular shoulder (104) along a first head axis (108), and the first probe member (102) being rotatable relative to the first tubular shoulder (104);
a second welding head (210) comprising a second probe member (202) and a second tubular member (204), the second probe member (202) being located inside and axially aligned with the second tubular shoulder (204) along a second head axis (208), and the second probe member (202) being rotatable relative to the second tubular shoulder (204);
a recess for positioning a weld object (112) therein, the recess located between the first welding head (110) and the second welding head (210);
wherein the first welding head (110) is oppositely disposed relative to the second welding head (210), and the first welding head (110) and the second welding head (210) are axially movable along the respective first and second head axes (108, 208), so as to selectably engage a weld object (112) positioned in the recess.

15. The apparatus for providing refill friction stir spot welding according to claim 14, wherein the first welding head (110) comprises a first clamp (106) and the second welding head (210) comprises a second clamp (206) for clamping the weld object (112) between the first clamp (106) and the second clamp.

## Amended claims

### Amended claims in accordance with Rule 137(2) EPC.

1. A method for performing refill friction stir spot welding, comprising:
providing a first welding head (110) comprising a first probe member (102) and a first tubular shoulder (104), the first probe member (102) being located inside and axially aligned with the first tubular shoulder (104) along a first head axis (108);
providing a second welding head (210) comprising a second probe member (202) and a second tubular shoulder (204), the second probe member (202) being located inside and axially aligned with the second tubular shoulder (204) along a second head axis (208);
locating the first welding head (110) on a first surface of a weld object to be welded such that the first probe member (102) and the first tubular shoulder (104) are in contact with the first surface;
locating the second welding head (210) on a second surface of the weld object (112), opposing the first surface, such that the second probe member (202) and the second tubular shoulder (204) are in contact with the second surface and the first head axis (108) is aligned with the second head axis (208);
simultaneously rotating the first welding head and the second welding head so as to form a volume of increased plasticity in the weld object proximate the first and second welding heads;
simultaneously advancing the first tubular shoulder (104) and the second probe member (202) from the initial position and into the respective first and second surface of the weld object (112) along the respective first and second head axis (108, 208), while retracting the first probe member (102) and the second tubular shoulder (204) from the initial position along the respective first and second head axis (108, 208);
advancing the first tubular shoulder (104) and the second probe member (202) into the weld object (112) so as to partially locate the second probe member (202) in the first tubular shoulder (104);
returning each of the first and second probe member (102, 202) and first and second tubular shoulder (104, 204) towards the initial position; and
removing the first and second welding head (110, 210) from the respective first and second surface of the weld object (112).

2. The method for performing refill friction stir spot welding according to claim 1, comprising simultaneously advancing the first tubular shoulder (104) and the second tubular shoulder (204) from the initial position and into the respective first and second surface of the weld object (112) along the respective first and second head axis (108, 208), while retracting the first and second probe members (102, 202) from the initial position the along the respective first and second head axis (108, 208).

3. The method for performing refill friction stir spot welding according to claim 2, wherein the weld object (112) comprises a first and a second component (112a, 112b) located between the first and second welding heads (110, 210), the first component (112a) comprising the first surface and the second component (112b) comprising the second surface, and
the method comprises advancing the first tubular shoulder (104) into the weld object (112) a distance equal or less than the thickness of the first component (112a), and advancing the second tubular shoulder (204) into the weld object (112) a distance equal or less than the thickness of the second component (112b).

4. The method for performing refill friction stir spot welding according to claim **Error! Reference source not found.,** wherein the weld object (112) comprises a first and a second component (112a, 112b) located between the first and second welding heads (110, 210), the first component (112a) comprising the first surface and the second component comprising the second surface, and
the method comprises advancing the first tubular shoulder (104) into the weld object a distance of more than the thickness of the first component (112a), and advancing the second probe member (202) into the weld object (112) a distance of more than the thickness of the second component (112b).

5. The method for performing refill friction stir spot welding according to claim 1, wherein the weld object (112) comprises a first and a second component (112a, 112b) located between the first and second welding heads (110, 210), the first component (112a) comprising the first surface and the second component (112b) comprising the second surface, and a third component (112c) located between the first and second components (112a, 112b) and
the method comprises advancing one of the first probe member (102) and the first tubular shoulder (104) into the weld object (112) along the first head axis (108) a distance larger, equal or less than the thickness of the first component (112a), and advancing one of the second probe member (202) and the second tubular shoulder (204) into the weld object (112) along the second head axis (208) a distance larger, equal or less than the thickness of the second component (112b) while retracting the other of the first probe member (102) and the first shoulder (104) and the other of the second probe member (202) and the second shoulder (204) from the initial position along the respective first and second axes (108, 208).

6. The method for performing refill friction stir spot welding according to claim 1, advancing the first probe member (102) and the second probe member (202) from the initial position and into the respective first and second surface of the weld object (112) along the respective first and second head axis (108, 208), while retracting the first tubular shoulder (104) and the second tubular shoulder (204) from the initial position along the respective first and second head axis (108, 208).

7. The method for performing refill friction stir spot welding according to any preceding claim, wherein the first welding head (110) comprises a first clamp (106) and the second welding head (210) comprises a second clamp (206) and the method comprises clamping the weld object (112) between the first clamp (106) and the second clamp (206) prior to rotating the first and second welding heads (110, 210).

8. The method for performing refill friction stir spot welding according to any preceding claim, comprising simultaneously rotating the first tubular shoulder (104) and the first probe member (102) in the same direction and
comprising simultaneously rotating the second tubular shoulder (204) and the second probe member (202) in the same direction.

9. The method for performing refill friction stir spot welding according to any of claims 1 to 7 comprising simultaneously rotating the first tubular shoulder (104) and the first probe member (102) in opposite directions and
comprising simultaneously rotating the second tubular shoulder (204) and the second probe member (202) in opposite directions.

10. The method for performing refill friction stir spot welding according claim 8 or 9, comprising rotating the first probe member (102) and the second probe member (202) in the same direction.

11. The method for performing refill friction stir spot welding according claim 8 or 9, comprising rotating the first probe member (102) and the second probe member (202) in opposite directions.

12. An apparatus for providing refill friction stir spot welding, comprising:
a first welding head (110) comprising a first probe member (102) and a first tubular shoulder (104), the first probe member (102) being located inside and axially aligned with the first tubular shoulder (104) along a first head axis (108), and the first probe member (102) being rotatable relative to the first tubular shoulder (104);
a second welding head (210) comprising a second probe member (202) and a second tubular member (204), the second probe member (202) being located inside and axially aligned with the second tubular shoulder (204) along a second head axis (208), and the second probe member (202) being rotatable relative to the second tubular shoulder (204);
a recess for positioning a weld object (112) therein, the recess located between the first welding head (110) and the second welding head (210);
wherein the first welding head (110) is oppositely disposed relative to the second welding head (210), and the first welding head (110) and the second welding head (210) are axially movable along the respective first and second head axes (108, 208), so as to selectably engage a weld object (112) positioned in the recess.

13. The apparatus for providing refill friction stir spot welding according to claim 12, wherein the first welding head (110) comprises a first clamp (106) and the second welding head (210) comprises a second clamp (206) for clamping the weld object (112) between the first clamp (106) and the second clamp.
